# EUROPEAN PATENT SPECIFICATION

(11) **EP 0 315 226 B1**
(45) Date of publication and mention of the grant of the patent: **16.01.2002**
(21) Application number: 88201914.4
(22) Date of filing: 06.09.1988
(51) Int. Cl.: C08G 64/00, C08K 3/22, C08L 69/00

(54) **Impact modified polymer mixture comprising a P-Cumyl-end capped PC**
Schlagzähe Polymermischung entahltend ein Polycarbonat mit p-Cumylendgruppen
melange de polymere résistant au choc comprenant un Polycarbonate ayant des groupes terminaux de p-cumyle

(30) Priority: 04.11.1987 NL 8702632
(43) Date of publication of application: 10.05.1989
(60) Divisional application: 93100635.7
(73) Proprietor: GENERAL ELECTRIC COMPANY, Schenectady, N.Y. 12151 (US)
(72) Inventor: Van de Watering, Ludovicus, NL-4600 AC Bergen op Zoom (NL); De Boer, Jan, NL-4600 AC Bergen op Zoom (NL)
(74) Representative: Grever, Frederik

(56) References cited:
- EP-A- 0 010 602
- EP-A- 0 164 477
- EP-A- 0 239 157
- WO-A-80/00708
- CHEMICAL ABSTRACTS, vol. 84, no. 22, 1976, page 50, no. 151634v, Columbus, Ohio, US; & JP-A-76 20 993 (MITSUBISHI GAS CHEMICAL CO., INC.) 19-02-1976
- PATENT ABSTRACTS OF JAPAN, vol. 6, no. 231 (C-135)[1109], 17th November 1982; & JP-A-57 133 149 (IDEMITSU KOSAN K.K.) 17-08-1982

## Description

Polymer mixture comprising an aromatic polycarbonate with terminal 4-cumylphenyl group and articles formed therefrom.

The invention relates to polymer mixtures comprising an aromatic polycarbonate having terminal 4-cumylphenyl groups.

Aromatic polycarbonate is a known polymer. Chain stoppers for controlling the molecular weight of the polymer are sometimes used in the preparation of aromatic polycarbonate.

Phenol is the most generally used chain stopper. The use of 4-cumylphenol as a chain stopper is known from JP-A-57(1982)-133149. The use of chain stoppers leads to the incorporation in the polymer of terminal groups derived from the chain stopper (namely 4-cumylphenyl groups).

It is generally known that the flow properties of polymers can be improved by reducing the molecular weight of the polymer. Limits are imposed upon such reduction: the mechanical properties of the polymer decrease when the molecular weight is reduced too far. This also applies to aromatic polycarbonate. Aromatic polycarbonate having a low molecular weight (corresponding to a relative viscosity of less than 1.24) has a much lower notch impact value at room temperature than normal polycarbonate having a relative viscosity of, for example, 1.29.

The invention is based on the discovery that aromatic polycarbonate having terminal 4-cumylphenyl groups also has good mechanical properties, for example, a good notch impact value, also with a low molecular weight, in particular also at reduced temperatures.

In general, the impact strength of a polycarbonate decreases considerably when the polycarbonate is mixed with an inorganic filler/pigment. The polycarbonate according to the invention has the surprising property that it maintains its impact strength after mixing with titanium dioxide.

The aromatic polycarbonate as used in the polymer mixture of the invention according to the invention is characterised in that it has a relative viscosity of less than 1.24. The relative viscosity is preferably between 1.19 and 1.24.

The polycarbonate powder according to JP-A-57(1982)-133419 has a molecular weight of 24,700 to 25,600, which corresponds to a relative viscosity of approximately 1.25-1.28.

The invention also relates a polymer mixture polycarbonate as defined in Claim 1, which is mixed with 0-10% by weight of titanium dioxide.

The polymer mixtures of the invention comprise
A. an aromatic polycarbonate with terminal 4-cumylphenylgroups and a relative viscosity, as measured according to DIN 7744, vol. 2, in a concentration of 0.5 g of polymer dissolved in 100ml of dichloro-ethane at 25°C, of less than 1.24 and
B. one or more agents to improve the impact strength, in which the quantity of constituent A is between 96 and 99.9% by weight and the quantity by weight of constituent B is between 0.1 and 4% by weight calculated with respect to the sum of constituents A and B.

It has been found that the addition of a comparatively small quantity of 0.1-4% by weight of one or more agents to improve the impact strength results in polymer mixtures which combine a good flow with a good impact strength at low termperatures. Larger quantities of the agent to improve the impact strength result in a deterioration of the flow.

A mixture of two different agents to improve the impact strength is preferably used in the polymer mixture according to the invention, namely a mixture of:
B1. a core-shell graft copolymer built up from a rubber-like core, built up substantially from an acrylate rubber or a butadiene rubber and one or more shells grafted thereon of a rigid polymer built up substantially from an alkylacrylate and/or alkylmethacrylate and/or vinylaromatic compound, for example, styrene and/or acrylonitrile and
B2. a block copolymer built up from rubber-like siloxane blocks and polycarbonate blocks.

In addition to the agents to improve the impact strength mentioned hereinbefore, the polymer mixture according to the invention may comprise one or more of the following constituents: one or more agents to improve the flame-retarding properties, one or more stabilisers, one or more agents to reduce the drip properties in flame tests, one or more pigments, one or more dyes, one or more fillers, one or more reinforcing fibres, for example, glass fibres, lubricants, mould-release agents, plasticisers.

The polymer mixture according to the invention may also comprise in particular pigments, for example, titanium dioxide, for example, in a quantity of 0.1-10 parts by weight per 100 parts by weight of the aromatic polycarbonate according to the invention plus the agent or the agents to improve the impact strength. It has been found that the addition of titanium dioxide only results in a very small reduction of the notch impact value.

The polymer mixture according to the invention may moreover comprise further polymers, for example, polyalkylene terephthalates, for example, polybutylene terephthalate. It is to be preferred, when polyalkylene terephthalates are used, to use 1-100 parts by weight of the polyalkylene terephthalate per 100 parts by weight of the aromatic polycarbonate according to the invention plus the agent or the agents to improve the impact strength.

Finally, the invention also relates to articles formed from the polymer mixture according to the invention.

### The aromatic polycarbonate as used in the invention

Aromatic polycarbonates are polymers known per se. They are conventionally prepared according to a so-called interfacial polymerisation process. In this process, phosgene is passed through an aqueous alkaline solution of a dihydric phenol in the presence of an inert organic solvent. A chain stopper is usually added during or shortly before the end of the reaction. 4-Cumylphenol is always used as a chain stopper in the preparation of the aromatic polycarbonate according to the invention. It is possible to control the molecular weight of the polycarbonate by dosing the quantity of chain stopper and by the choice of the instant at wich the chain stopper is added to the reaction mixture. For the preparation of the polymer according to the invention, all this is controlled so that a polycarbonate having a relative viscosity of less than 1.23 is obtained. Relative viscosity is always to be understood to mean herein the relative viscosity determined according to DIN-standard 7744, vol. 2, in a concentration of 0.5 g of polymer dissolved in 100 ml of dichloroethane at 25° C. The measurements were always carried out using a Ubelohde viscosimeter with a so-called Oc capillary.

It is also possible to obtain a polycarbonate according to the invention by mixing two or more different polycarbonates. For example, by mixing, in approximately equal quantities by weight, a polycarbonate having a relative viscosity of 1.24 with a polycarbonate having a relative viscosity of 1.20. Both polycarbonates must have terminal 4-cumylphenyl groups.

As indicated above, the polymer mixture according to the invention comprises the aromatic polycarbonateaccording to the invention and one or more agents to improve the impact strength.

The addition of one or more agents to improve the impact strength to the polycarbonate according to the invention results in a polymer mixture which has a good flow and a good impact strength at low terperatures. For this purpose, only comparatively small quantities of the agent or the agents to improve the impact strength need be added.

In order to obtain the same good impact strength at low temperatures for polymer mixtures based on a polycarbonate having the same low relative viscosity but with terminal phenyl groups, it is necessary to add larger quantities of the agent to improve the impact strength. However, this usually results in a deterioration of the flow properties.

A mixture of two agents to improve the impact strength is preferably used in the polymer mixtures according to the invention, namely a mixture of:
B1. a core-shell graft copolymer built up from a rubber-like core, built up substantially from an acrylate rubber or a butadiene rubber and one or more shells grafted thereon of a rigid polymer built up substantially from an alkylacrylate and/or alkylmethacrylate and/or vinylaromatic compound, for example, styrene and/or acrylonitrile, and
B2. a block copolymer built up from rubber-like silicon blocks and polycarbonate blocks.

Core-shell graft copolymers as meant hereinbefore are generally known. For this purpose, reference may be made, for example, to US-A-3,426,101; US-A-3,655,826; US-A-4,096,202; US-A-4,180,494.

Block copolymers built up from rubber-like silicon blocks and polycarbonate blocks are also known.

For this purpose, reference may be made, for example, to US-A-2,999,845; US-A-3,189,662; US-A-3,419,634; US-A-3,679,774 and EP-A-0193757.

The polymer mixture according to the invention may be prepared according to any conventional method of preparing polymer mixtures. The polymer mixture according to the invention is preferably prepared by compounding in an extruder.

The invention will now be described in greater detail with reference to the ensuing specific examples.

### Example I

### The preparation of an aromatic polycarbonate

Various aromatic polycarbonates were prepared by means of interfacial polymerisation starting from bisphenol A and phosgene. A chain stopper was always used in the preparation: 4-cumylphenol was used in the preparation of polymers A and B, and phenol was used in the preparation of polymers C and D. The chain stopper was used in a concentration of 6.2 mol% for polymer A, 4.7 mol% for polymer B, 6.2 mol% for polymer C, and 4.6 mol% for polymer D.

In this manner four polymers were obtained having a relative viscosity as indicated in Table A.

The notch impact value according to Izod was measured at different temperatures. The results are also recorded in Table A.

The melt flow index (MFI) was also determined according to DIN 53735 or ISO 1133 at 300° C under a load of 12 N for 10 minutes.

**Table A**

| Polymer | A | B | C | D |
|---|---|---|---|---|
| Terminal group | 4-cumylphenyl | 4-cumylphenyl | phenyl | phenyl |
| . relative viscosity | 1.20 | 1.23 | 1.20 | 1.25 |
| . MFI (g/10 min) | 55 | 25 | 50 | 20 |
| . Izod notch impact value (J/m) | | | | |
| Room temp. | 300 | 620 | 110 | 620 |
| 0° C | 100 | 510 | 100 | 120 |
| -10° C | 100 | 250 | 100 | 100 |
| -20° C | 100 | 170 | 100 | 170 |

### Example II

Various polymer mixtures were prepared using on the one hand a mixture of equal parts by weight of polymer A and polymer B, and on the other hand Polymer C and Polymer D (according to example I). Each of the mixtures thus obtained was compounded in an extruder with two different agents to improve the impact strength and with a mixture of these two agents to form a polymer mixture. The following constituents were used as an agent to improve the impact strength:

| | |
|---|---|
| Paraloid® KM 653 | a core-shell copolymer commercially available from Rohm & Haas having a core based on a butadiene rubber and a shell substantially built up from methyl methacrylate. |
| LR 3320 | a polycarbonate-polysiloxane block copolymer commercially available from General Electric Company having blocks with approximately 9 siloxane units. |

The notch impact value according to IZOD at different temperatures, the "flexed plate impact" according to DIN 53443 at -30° C and the melt flow index were determined for the resulting polymer mixtures. The transition temperature between ductile and brittle fracture was also determined (D/B).

The results are recorded in Table D hereinafter for the polymer mixtures based on a polymer according to the invention (with terminal 4-cumylphenyl groups). The results for polymer mixtures based on a polymer having the same intrinsic viscosity but a terminal group (phenyl group) which is not in accordance with the invention are recorded in Table E.

**Table D**

| Composition No. (parts by weight) | 1 | 2 | 3 | 4 | 5 | 6 | 7 |
|---|---|---|---|---|---|---|---|
| Polycarbonate A | 50 | 50 | 50 | 50 | 50 | 50 | 50 |
| Polycarbonate B | 50 | 50 | 50 | 50 | 50 | 50 | 50 |
| LR 3320 | - | 0.5 | 1.5 | - | - | 0.5 | 1.5 |
| KM 653 | - | - | - | 0.5 | 1.5 | 1.0 | 1.0 |

| Properties | | | | | | | |
|---|---|---|---|---|---|---|---|
| Izod notch impact value (J/m) | | | | | | | |
| Room temperature | 621 | 621 | 619 | 639 | 601 | 615 | 599 |
| 10° C | 502 | 591 | 585 | 585 | 562 | 584 | 563 |
| 0° C | 462 | 261 | 306 | 313 | 460 | 473 | 533 |
| -5° C | 156 | 216 | 215 | 465 | 526 | 475 | 520 |
| -10°C | 159 | 146 | 175 | 143 | 294 | 199 | 461 |
| -15°C | - | - | - | - | 204 | 177 | 349 |
| -20°C | - | - | - | - | - | - | 223 |

| Flexed Plate impact (J) | | | | | | | |
|---|---|---|---|---|---|---|---|
| -30° C | 102 | 97 | 91 | 119 | 108 | 117 | 123 |
| MFI (g/10 min.) | 39 | 38 | 37 | 37 | 39 | 38 | 39 |
| Ductile/Brittle Transition temp. in IZOD impact test (°C) | -2 | 5 | -2 | -7 | -7 | -7 | -17 |

**Table E**

| Composition No. (parts by weight) | 8 | 9 | 10 | 11 | 12 | 13 | 14 |
|---|---|---|---|---|---|---|---|
| Polycarbonate C | 50 | 50 | 50 | 50 | 50 | 50 | 50 |
| Polycarbonate D | 50 | 50 | 50 | 50 | 50 | 50 | 50 |
| LR 3320 | - | 0.5 | 1.5 | - | - | 0.5 | 1.5 |
| KM 653 | - | - | - | 0.5 | 1.5 | 1.0 | 1.0 |

| Properties | | | | | | | |
|---|---|---|---|---|---|---|---|
| Izod notch impact value (J/m) | | | | | | | |
| Room temperature | 103 | 347 | 570 | 212 | 620 | 590 | 610 |
| 10° C | 97 | 222 | 179 | 117 | 340 | 487 | 566 |
| 0° C | 103 | 120 | 137 | 105 | 159 | 181 | 210 |

| Flexed Plate impact (J) | | | | | | | |
|---|---|---|---|---|---|---|---|
| -30° C | 91 | 109 | 113 | 86 | 88 | 106 | 103 |
| MFI (g/10 min.) | 37 | 38 | 36 | 39 | 38 | 38 | 38 |
| Ductile/Brittle Transition temp. in IZOD impact test (°C) | >RT | RT | 15 | >RT | 10 | 5 | 5 |
| *) RT = room temperature. | | | | | | | |

Comparison of the results recorded in Tables D and E demonstrate that the polycarbonate according to the invention and polymer mixtures based on that polycarbonate have a better combination of low temperature impact strength and flow than the known polycarbonate. The D/B temperatures with such a flow are approximately 15° C lower. When the polymer mixtures according to Table E are to be given an equal low temperature impact strength, a larger quantity of LR 3320 and/or KM 653 would have to be added; this would lead to a considerable increase of the viscosity of the melt and an unacceptable increase of the melt flow index.

## Claims

1. A polymer mixture comprising
A. an aromatic polycarbonate with terminal 4-cumylphenylgroups and a relative viscosity, as measured according to DIN 7744, vol. 2, in a concentration of 0.5 g of polymer dissolved in 100ml of dichloro-ethane at 25°C, of less than 1.24 and
B. one or more agents to improve the impact strength, in which the quantity of constituent A is between 96 and 99.9% by weight and the quantity by weight of constituent B is between 0.1 and 4% by weight calculated with respect to the sum of constituents A and B.

2. A polymer mixture according to claim 1 wherein constituent B consists of a mixture of two agents to improve the impact strength, namely:
B1. a core-shell graft copolymer built up from a rubberlike core substantially built up from an acrylate rubber or a butadiene rubber and one or more shells of a rigid polymer grafted thereon and built up substantially from an alkyl acrylate and/or alkylmethylacrylate and/or vinylaromatic compound, and
B2. a block copolymer built up from rubber-like siloxane blocks and polycarbonate blocks.

3. A polymer mixture as claimed in claim 1, **characterised in that** the polymer mixture comprises, in addition to the constituents mentioned sub A and B, one or more of the following constituents: one or more agents to improve the flame-retarding properties, one or more stabilisers, one or more agents to reduce the drip properties in flame tests, one or more pigments, one or more dyes, one or more fillers, one or more reinforcing fibres, lubricants, mould release agents, plasticisers.

4. A polymer mixture as claimed in claim 3, **characterised in that** the polymer mixture comprises as a pigment 0.1-10 parts by weight of titanium dioxide per 100 parts by weight of A + B.

5. A polymer mixture as claimed in claim 1, **characterised in that** the polymer mixture comprises 1-100 parts by weight of a polyalkylene terephthalate per 100 parts by weight of A + B.

6. Articles formed from the polymer mixture as claimed in claims 1-5.

## Patentansprüche

1. Polymermischung, umfassend
A. ein aromatisches Polycarbonat mit endständigen 4-Cumylphenyl-Gruppen und einer relativen Viskosität von weniger als 1,24, gemessen nach DIN 7744, Band 2, in einer Konzentration von 0,5 g Polymer, gelöst in 100 mℓ Dichlorethan, bei 25°C und
B. ein oder mehrere Mittel zur Verbesserung der Schlagzähigkeit, wobei die Menge des Bestandteils A zwischen 96 und 99,9 Gew.-% und die Menge von Bestandteil B zwischen 0,1 und 4 Gew.-% liegt, errechnet mit Bezug auf die Summe der Bestandteile A und B.

2. Polymermischung nach Anspruch 1, worin der Bestandteil B aus einer Mischung von zwei Mitteln zur Verbesserung der Schlagzähigkeit besteht, nämlich:
B1. einem Kern-Hülle-Pfropfcopolymer, aufgebaut aus einem kautschukartigen Kern, der im Wesentlichen aus einem Acrylat-Kautschuk oder einem Butadien-Kautschuk aufgebaut ist, und einer oder mehreren Hüllen aus einem darauf gepfropften starren Polymer, das im Wesentlichen aus einer Alkylacrylat- und/oder Alkylmethacrylat- und/oder aromatischen Vinyl-Verbindung aufgebaut ist, und
B2. einem Blockcopolymer, das aus kautschukartigen Siloxan-Blöcken und Polycarbonat-Blöcken aufgebaut ist.

3. Polymermischung nach Anspruch 1, **dadurch gekennzeichnet, dass** die Polymermischung zusätzlich zu den unter A und B erwähnten Bestandteilen einen oder mehrere der folgenden Bestandteile umfasst: eines oder mehrere Mittel zur Verbesserung der flammhemmenden Eigenschaften, einen oder mehrere Stabilisatoren, ein oder mehrere Mittel zum Verringern des Tropfens in Entflammungstests, ein oder mehrere Pigmente, einen oder mehrere Farbstoffe, einen oder mehrere Füllstoffe, eine oder mehrere verstärkende Fasern, Schmiermittel, Entformungsmittel, Weichmacher.

4. Polymermischung nach Anspruch 3, **dadurch gekennzeichnet, dass** die Polymermischung als ein Pigment 0,1 bis 10 Gewichtsteile Titandioxid auf 100 Gewichtsteile von A + B umfasst.

5. Polymermischung nach Anspruch 1, **dadurch gekennzeichnet, dass** die Polymermischung 1 bis 100 Gewichtsteile eines Polyalkylenterephthalats auf 100 Gewichtsteile von A + B umfasst.

6. Gegenstände, geformt aus der Polymermischung, wie in den Ansprüchen 1 bis 5 beansprucht.

## Revendications

1. Mélange de polymères comprenant :
A. un polycarbonate aromatique présentant des groupes terminaux 4-cumylphényle et une viscosité relative, telle que mesurée selon la norme DIN 7744, vol. 2, pour une concentration de 0,5 g de polymère dissous dans 100 ml de dichloroéthane à 25 °C, inférieure à 1,24 ; et
B. un ou plusieurs agents pour améliorer la résistance au choc,
dans lequel la quantité du composant A est comprise entre 96 et 99,9% en poids et la quantité en poids du composant B est comprise entre 0,1 et 4 % en poids, par rapport à la totalité des composants A et B.

2. Mélange de polymères selon la revendication 1, dans lequel le composant B consiste en un mélange de deux agents pour améliorer la résistance au choc, à savoir :
B1. un copolymère de greffage de type coeur-enveloppe formé d'un coeur de type caoutchouc pratiquement formé à partir d'un caoutchouc d'acrylate ou d'un caoutchouc de butadiène, et d'une ou plusieurs enveloppes d'un polymère rigide greffé dessus et formé pratiquement à partir d'un acrylate d'alkyle et/ou d'un méthylacrylate d'alkyle et/ou d'un composé vinyl-aromatique, et
B2. un copolymère séquencé constitué de séquences siloxanes de type caoutchouc et de séquences polycarbonates.

3. Mélange de polymères selon la revendication 1, **caractérisé en ce qu'**il comprend, en plus des composants A et B mentionnés, un ou plusieurs des composants suivants :
un ou plusieurs agents pour améliorer les propriétés d'ignifugation, un ou plusieurs stabilisants, un ou plusieurs agents pour améliorer les caractéristiques de chute de gouttes dans les essais de réaction aux flammes, un ou plusieurs pigments, un ou plusieurs colorants, une ou plusieurs charges, une ou plusieurs fibres de renforcement, des lubrifiants, des agents de démoulage et des plastifiants.

4. Mélange de polymères selon la revendication 3, **caractérisé en ce qu'**il comprend 0,1 à 10 parties en poids de dioxyde de titane, comme pigment, pour 100 parties en poids de A+B.

5. Mélange de polymères selon la revendication 1, **caractérisé en ce qu'**il comprend 1 à 100 parties en poids d'un poly(téréphtalate d'alkylène) pour 100 parties en poids de A+B.

6. Articles formés à partir du mélange de polymères selon les revendications 1 à 5.
